# EUROPEAN PATENT SPECIFICATION

(11) **EP 1 551 668 B1**
(45) Date of publication and mention of the grant of the patent: **12.12.2007**
(21) Application number: 03751681.2
(22) Date of filing: 03.10.2003
(51) Int. Cl.: B60R 9/042, B60R 9/055

(54) **DEVICE AT A BOX FOR A CAR**
KOFFERVORRICHTUNG FÜR EIN AUTO
DISPOSITIF PREVU DANS UN COFFRE SUPPORTE PAR UNE VOITURE

(30) Priority: 04.10.2002 SE 0202961
(43) Date of publication of application: 13.07.2005
(73) Proprietor: Autoadapt AB, 443 61 Stenkullen (SE)
(72) Inventor: SELLE ANDERSSON, Charlotte, S-531 43 Lidköping (SE)
(74) Representative: Inger, Lars Ulf Bosson
(86) International application number: PCT/SE2003/001536
(87) International publication number: WO 2004/030990

(56) References cited:
- EP-A1- 1 031 336
- DE-A1- 4 412 689
- US-A- 3 823 839
- US-A- 4 039 096
- US-A- 5 827 036

## Description

### Technical field

The present invention relates to a roof box arrangement for mounting on a vehicle, preferably a passenger car, which roof box arrangement has a container comprising an under part and an upper part, in conjunction with which the roof box arrangement has at least one open position for loading and unloading and a closed position for the storage of objects. The invention also relates to a load system to permit the loading and unloading of a collapsible wheelchair into and from a roof box arrangement.

### Technical background

Physically disabled persons often experience the need to take along additional aids, such as a wheel chair, to enable them to move around. In conjunction with car transport, problems are encountered with the storage of such aids, since the interior space of the car is often limited and accessibility to a number of storage areas is also restricted because of the physical disability. A common way of carrying a wheel chair today is for the physically handicapped person to pick up the wheel chair from his position in the driver's seat and to lift it over to the passenger's seat. This is perceived by many persons as cumbersome and difficult and is associated with other disadvantages, for example if the wheel chair is dirty.

US 4,376,611 describes a roof box intended for hoisting a wheel chair in and out with a hoisting device belonging to the roof box. The wheel chair is connected to a winch and is then raised along the side of the car as far as a roof box, which has a hatch on one side, in which it is stored during transport. One problem associated with a roof box of this type is that loading is only possible from one side of the car. It is desirable in many instances to be able to load the car from either side of the car, for example if the car is parked in a tight space or if another person is to drive and the physically handicapped person is to travel in the passenger's seat. This type of roof box also requires an entirely different execution if the roof box is to be used on a left-hand-drive car instead of on a right-hand-drive car, or vice versa.

Generic US 3,823,839 also shows a roof box which is opened by causing an upper part to be extended outwards to one side and by hoisting in the roof box from below, whereupon the upper part of the roof box containing the collapsed wheel chair is pushed back into position above the car. This solution is also restricted to loading from one side of the car.

EP 1 031 336 instead shows a storage arrangement, which is described as being capable of being caused to rotate in relation to the roof of the car on which it is mounted. The storage arrangement in accordance with EP 1 031 336 can be swung out over the wheel chair standing alongside the car, and it is then possible by means of a hoisting device to hoist up the wheel chair and in beneath a container which exhibits a certain degree of elasticity. Because hoisting devices in the prior art are relatively cumbersome, in particular during the hoisting operation itself, the roof boxes in the prior art are often large and, in particular, tall. By making the container elastic, there is a reduced need for free height for the hoist. An elastic container has other disadvantages, however, both aesthetic and relating to road safety.

One problem associated with current designs is that they are heavy and cumbersome. A wheel chair roof box under the name ChairTopper is commercially available at the present time. It has a weight of 55 kg and a height of 56 cm. Many of today's passenger cars are designed for a maximum roof load of ca. 75 kg, which imposes limits on the weight of the wheel chair. The handling characteristics of a vehicle are influenced by a high centre of gravity, and a tall roof box also contributes to an increase in the surface exposed to the wind.

### Description of the present invention

It is thus desirable to find a solution which permits the secure storage of a wheel chair during a journey and, at the same time, to minimize the risk of the wheel chair scratching or damaging the car during loading and unloading. It is also desirable to find a solution which permits a wheel chair to be loaded and unloaded from both sides of the car.

The object of the present invention is to make available a solution to the problems outlined above. A further object of the invention is to make available a solution which permits space-saving storage and a low weight at the same time.

These objects are achieved in accordance with the invention with a roof box arrangement for mounting on a vehicle, preferably a passenger car, which roof box arrangement has a container comprising an under part and an upper part, in conjunction with which the roof box arrangement has at least one open position for loading and unloading and one closed position for the storage of objects, and in that the roof box arrangement comprises a hoisting device capable of being positioned inside the container, which hoisting device is mounted in such a way that it can be pivoted to either side relative to the container, and in that the hoisting device comprises a holder intended for engagement with an object, which holder , when the roof box arrangement is in the open position and the hoisting device is in an outward-pivoted position, is capable of being lowered and raised, in conjunction with which lowering and raising of the object is made possible as preferred on either side of the roof box arrangement.

In accordance with a preferred embodiment, the object is also capable of being loaded into and unloaded from the roof box arrangement by means of the hoisting device moving the object in and out over the under part of the container. This loading procedure allows controlled loading and unloading and permits a compact design of the roof box arrangement. In accordance with a preferred embodiment of the invention, a roof box is used which has an upper part that is attached in an articulated fashion to an under part on one of the short sides. Other means of supporting the upper part of the roof box are naturally possible, such as supporting in such a way as to be capable of displacement or hoisting along the long side, as described below in relation to a further illustrative example.

The hoisting device is preferably capable of being caused to pivot between 0 and 135 degrees to both sides from a starting position arranged essentially half-way between the longitudinal sides of the roof box arrangement, which allows flexibility when loading and unloading. It is more preferable for the crane arm of the hoisting device to be lockable in an outward-pivoted position within the range of 70 to 110 degrees, and even more preferable for it to be essentially of the order of 90 degrees.

In accordance with the invention, the hoisting device consists of a drawing device capable of being fed from a feed roller, to which device the holder is connected for the purpose of controlling raising and lowering.

In a preferred embodiment of the invention, the roof box arrangement is so arranged as to accommodate a collapsible wheel chair. A hoisting device attachment is mounted on a support arrangement in the roof box arrangement, which support arrangement permits mounting in the longitudinal extent of the roof box arrangement at a suitable point, having regard for the positioning of the doors of the vehicle in question.

In a further illustrative embodiment, the upper part of the container is capable of being opened and closed by activation of a Crab actuator. Opening and closing of the roof box arrangement is permitted by this design without the need for manual intervention in the actual roof box, which is an advantage for physically disabled persons.

In accordance with a second aspect of the invention, a load system for a collapsible wheel chair has been brought about comprising a roof box arrangement in accordance with the invention. Because the hoisting device comprises a support with variable positions, against which support the collapsible wheel chair makes contact, at least for that part of the hoisting operation during which the position of the collapsed wheel chair deviates from an essentially vertical position in conjunction with loading and unloading, loading and unloading with a secure support for the wheel chair is made available during the whole of the loading cycle by the load system in accordance with the invention.

In order further to simplify operation for the physically handicapped person, the load system in accordance with the invention is preferably connected to a control system enabling one or more of the following functions of the roof box arrangement to be regulated from a control panel: opening and closing of the roof box arrangement, swinging the roof box arrangement out to the left or the right when the roof box is open, raising and lowering the collapsed wheel chair when the wheel chair is in engagement with the holder. The load system is consequently very easy for the wheel chair user to operate. By attaching the holder to the cross-frame of the wheel chair, for example, and by pressing on the control panel, the wheel hair is hoisted into the roof box. When the wheel chair is in place in the roof box, the upper part can be closed. Unloading takes place in a similar fashion, although in the reverse sequence.

Within the scope of the idea of invention for an arrangement of the aforementioned kind, the characteristic features described above can be combined freely, of course, or can occur as individual embodiments. It will be appreciated, for example, that the container for the roof box can have many different designs and sizes without departing from the idea of invention.

The precise design of the hoisting device is not restricted to a particular appearance provided that is capable of being caused to pivot to both sides of the car. The holder can be executed in the form of a hook, for example, or more in the form of a coat-hanger, depending on the model of wheel chair.

The object may consist of other appliances for the physically handicapped, such as crutches, walking frames, walking frames on wheels and more advanced wheel chairs, although collapsible wheel chairs are a primary area of application.

### Brief description of the drawings

The invention is described in greater detail below in relation to a couple of illustrative embodiments and with reference to the accompanying drawings, in which

Figs. 1-3 show a first illustrative embodiment, and Figs. 4-7 show a second illustrative embodiment.
Fig. 1 is a perspective view of a car with a roof box arrangement in accordance with a first embodiment of the invention.
Figs. 2a-2f show a loading sequence as a perspective view of a roof box arrangement in accordance with an aforementioned first illustrative embodiment of the invention.
Fig. 3 is a partial view taken from Fig. 2c of the hoisting device associated with the roof box arrangement.
Fig. 4 is a perspective view of a roof box with an upper part that is capable of being raised.
Fig. 5 is a perspective view of a roof box arrangement in accordance with a second illustrative embodiment of the invention shown with an integral hoisting device secured in a packed position in the box.
Fig. 6 shows the roof box arrangement viewed in perspective at an angle from above and in the folded, packed position.
Fig. 6a shows the roof box arrangement in an initial position prior to movement.
Fig. 6b shows the roof box arrangement in a position in which it is pivoted to the side.
Fig. 6c shows the roof box arrangement in a position ready for hoisting with a wheel chair illustrated beneath it.
Fig. 7 shows a detail of the actual hoisting device.

### Description of embodiments

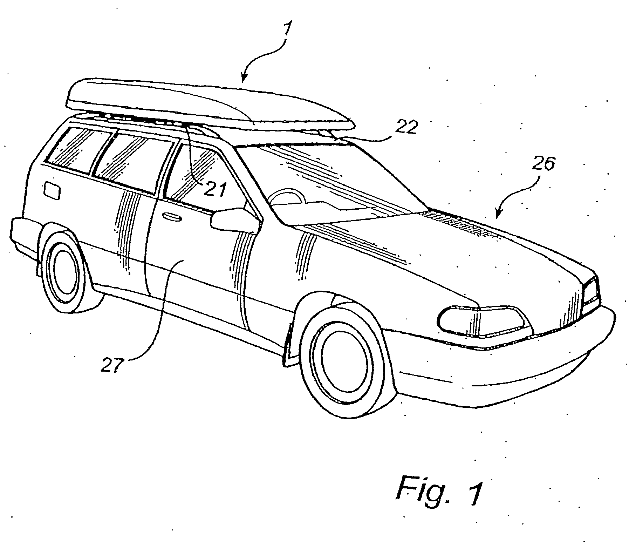

A roof box arrangement in accordance with a preferred embodiment of the invention is designated by 1 in Fig. 1 and is arranged by means of fastening devices 21 on a roof 22 of a passenger car 26. It can also be appreciated that the height of the roof box arrangement is low in relation to other previously disclosed roof boxes for the storage of wheel chairs. An appropriate model of roof box for the purpose has a height of around 34 cm and a width of around 115 cm together with a length of slightly more than 2 m.

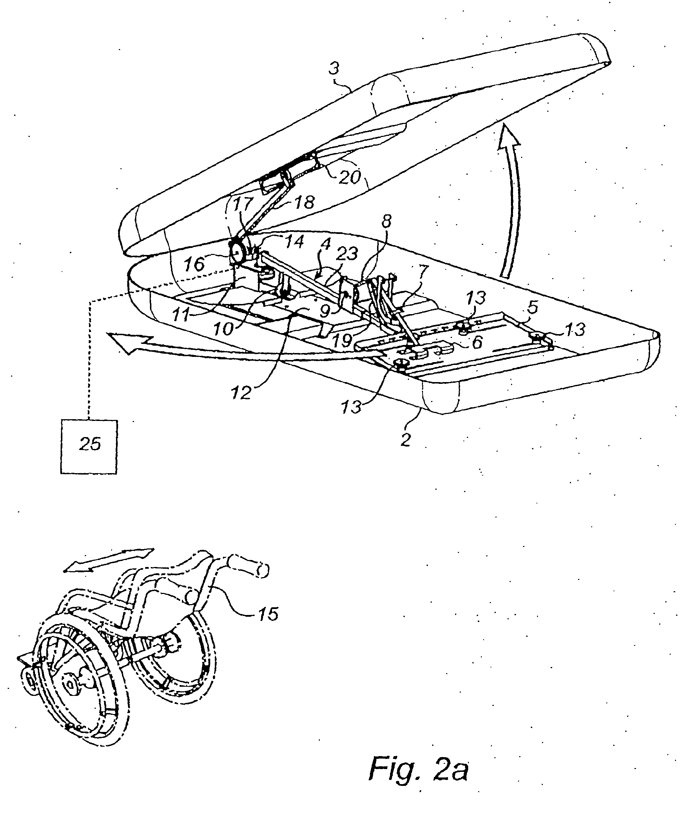

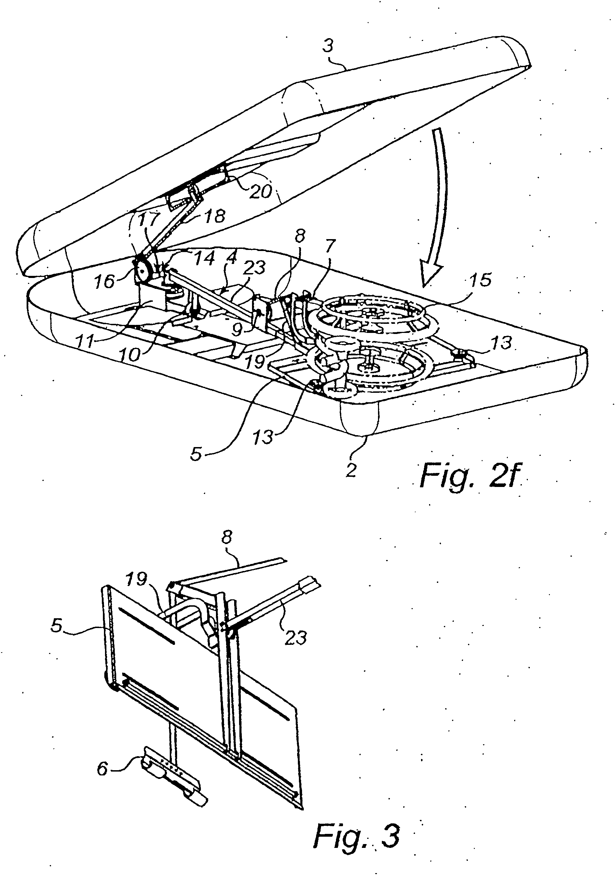

A roof box arrangement 1 in accordance with a preferred embodiment is shown in Fig. 2a. No vehicle on which the roof box arrangement 1 is mounted is illustrated in any of Figs. 2a-2f in order to avoid excessive detail. The roof box arrangement 1 has a container comprising an under part 2 and an upper part3. The roof box arrangement 1 has at least one open position for loading and unloading and one closed position for the storage of objects. It is preferable to use a roof box whose container has an upper part 3 which is attached in an articulated fashion to one short side of an under part 2 of the container.

A hoisting device 4, which is capable of being positioned internally within the container, is mounted in such a way as to be capable of being caused to pivot to either side relative to the container. The hoisting device 4 comprises a holder 6 intended for engagement with an object, especially a wheel chair 15, which holder is capable of being lowered and raised. The holder 6 is arranged in this case in conjunction with a drawing device 8, which is attached to a feeder 9, which is arranged on a crane arm 23 consisting of the hoisting device 4. The hoisting device 4 is pivotally arranged in relation to an adjustable hoisting device attachment 11, which hoisting device attachment is capable of mounting in relation to a support device 12. Because the support device 12 exhibits an extent along the roof box arrangement 1, the position of the hoisting device in relation to the vehicle doors 27 on the vehicle 26 on which the roof box arrangement will be mounted is adapted in such a way that the hoisting operation is as appropriate and convenient as possible depending on the model of car in question. Because the support plate 12 possesses the ability to absorb loads, this mounting is easy to execute in a flexible fashion. In order to support the hoisting arrangement, in particular when it is subjected to loading during a hoisting operation, a support wheel is arranged on the under side of the crane arm 23. The hoisting device 4 is driven by a motor 14.

For the purpose of opening and closing the roof box arrangement, an actuator 16 is operatively connected to the upper part 3 of the container. In accordance with a preferred embodiment, the actuator 16 is a so-called Crab gear. SKF supplies a model that is suitable for the purpose under the designation "Rotary actuator CRAB 05". The need to open and close the roof box arrangement 1 is avoided with an actuator. It will be appreciated by a person skilled in the art that other solutions are also available to achieve a similar effect.

In accordance with a second aspect of the invention, a load system comprising a roof box arrangement 1 of the kind described above is made available. The function of the load system together with the function of the roof box arrangement 1 during loading and unloading will now be described in greater detail with reference to Figs. 2a-2f.

A control system is included in a preferred embodiment of the load system in accordance with the invention to permit control and regulation of the loading and unloading of the roof box arrangement 1. A control panel 25 is essentially operatively connected to the roof box arrangement 1 in the load system in order to regulate one or other of the following functions of the roof box arrangement 1: opening and closing of the roof box arrangement 1, pivoting of the hoisting device 4 to the left or the right when the roof box is open, raising and lowering of the collapsed wheel chair 15 when the wheel chair 15 is in engagement with the holder 6. It will be appreciated that these operations can be performed in different ways and can be combined in different stages.

In Fig. 2a the container of the roof box arrangement 1 is in an open position. The hoisting device 4 is preferably arranged in an initial position in the central end part of the roof box in relation to its extent in the longitudinal sense.

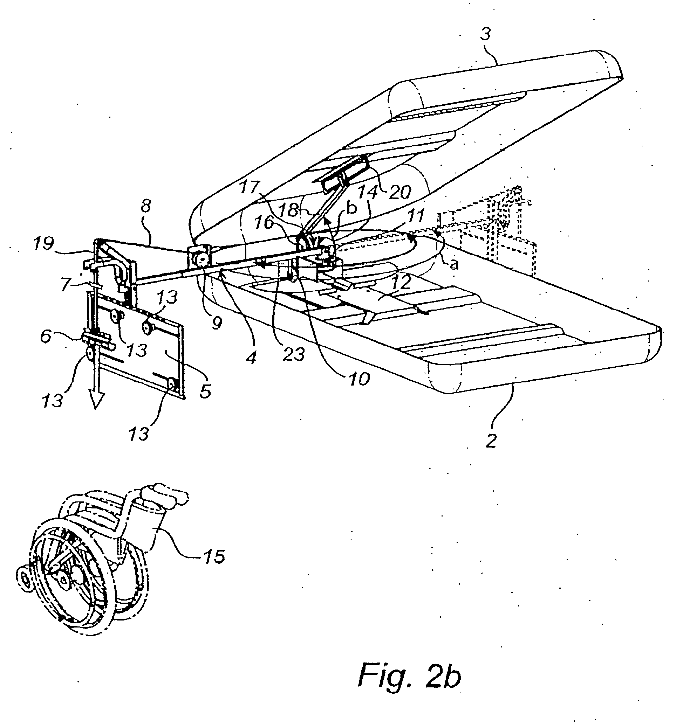

In Fig. 2b the hoisting device 4 is in an outward-pivoted position. Because the hoisting device 4 is arranged essentially symmetrically in relation to the longitudinal lateral edges of the roof box 1, it is possible to select the side for the hoist without the need to make any adjustments to the initial positioning of the hoisting device 4 prior to a hoisting operation on a new side of the roof box arrangement 1.

When the crane arm reaches over the side and assumes a position in relation to the door of the vehicle and the object to be hoisted, the drawing device 8 is activated and is fed out from a feeder 9. Far out on the crane arm 23 a support 5 is pivotally attached via a position control 19. When the drawing device 8 is fed out, a catch 7 releases the position control 19 and the position control moves to a new position, which means that the support 5 assumes a vertical position from an essentially horizontal position. Arranged on the support are a number of easily adjustable stop devices, the positions of which are capable of adaptation to retain the object in conjunction with hoisting.

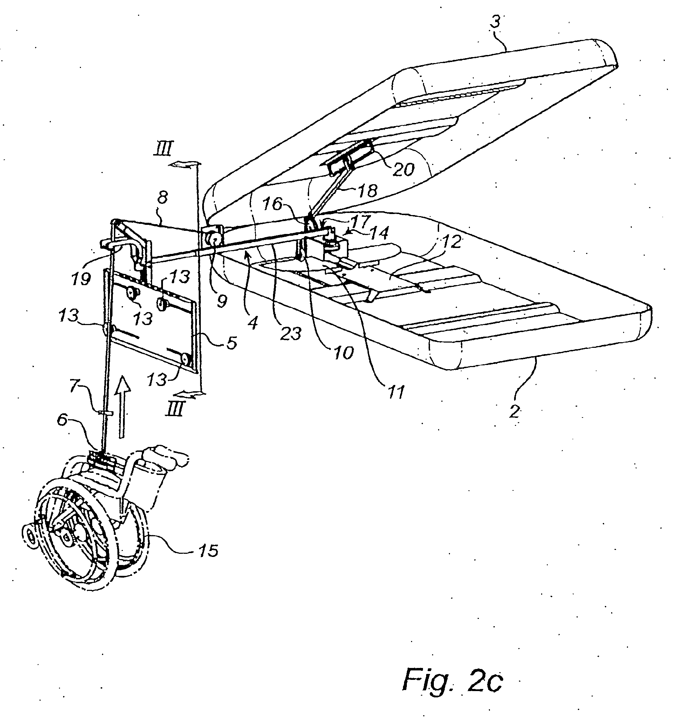

The next sequence is illustrated in Fig. 2c, in conjunction with which the wheel chair 15, which wheel chair represents the object in this case, is in engagement with the holder 6 after a simple operation, and the feeder 9 can begin to feed in the drawing device 8 in order to start the hoisting operation.

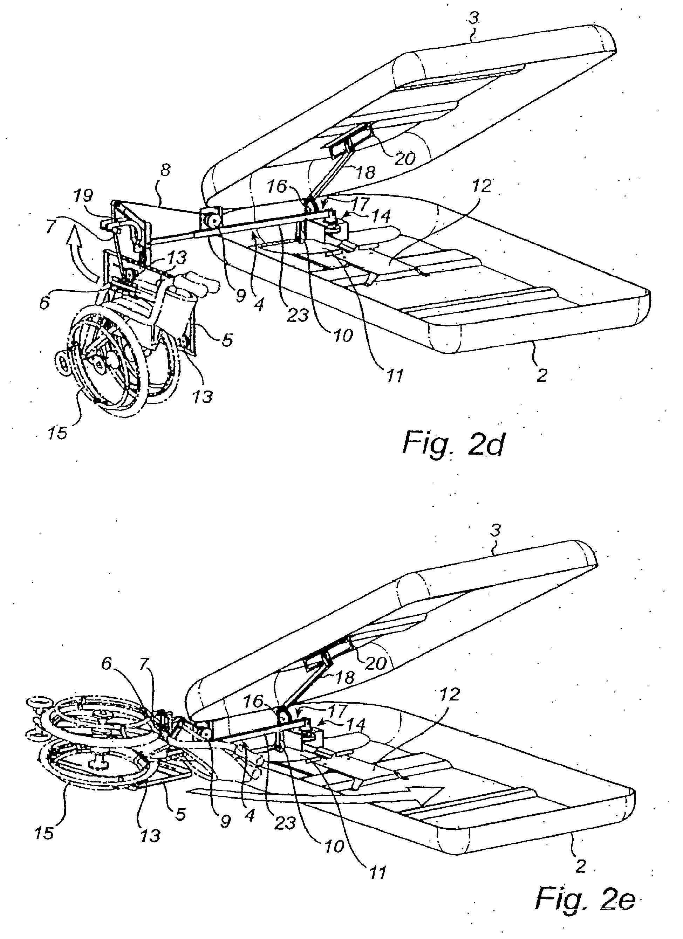

During feeding-in of the drawing device 8, the catch 7 will arrive in a position in which it comes into contact with the position control 19, whereupon the position control 19 changes position by being caused to pivot about the articulated attachment to the crane arm 23. The start of this sequence is shown in Fig. 2d.

When the position control 19 with its associated support 5, carrying the wheel chair 15, has reached an essentially horizontal position, the hoisting device 4 can be pivoted once more into the initial position in the roof box arrangement 1. The manner in which the hoisting device 4 carries the wheel chair 15 into a storage position in the roof box arrangement 1 is illustrated with an arrow in Fig. 2e.

In a final stage in the loading cycle, the roof box arrangement 1 is closed by activation of the actuator 16, preferably of the Crab 05 type, in order to draw the container together and keep it closed. The wheel chair or some other object is stored securely by being retained by the holder 6 and the stop devices 13 together with the support 5 when it is stored in the roof box arrangement, which contributes to safe road transport.

The previously mentioned operations are repeated in conjunction with unloading of the wheel chair 15 from the roof box arrangement 1 by means of the preferred load system although, as will be appreciated, in the reverse sequence, for which reason this is not described in any greater detail here.

In Fig. 3 the support 5 and the position control 19 are shown at a different angle in order to make it clear how this part of the hoisting device 4 in accordance with the present invention is constructed.

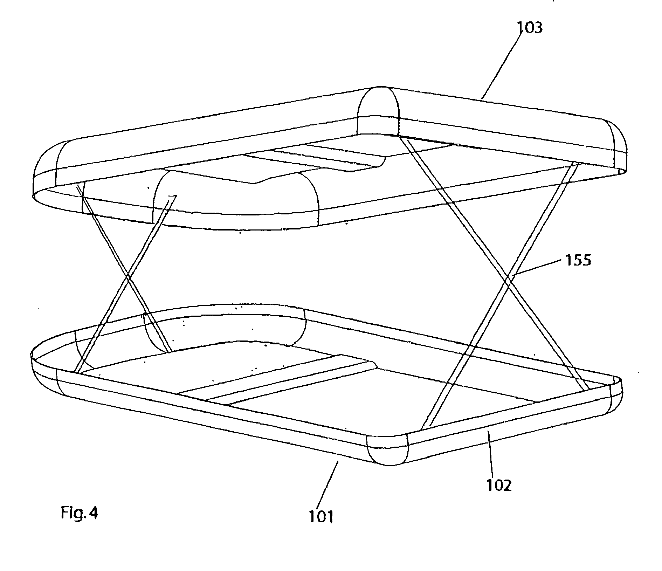

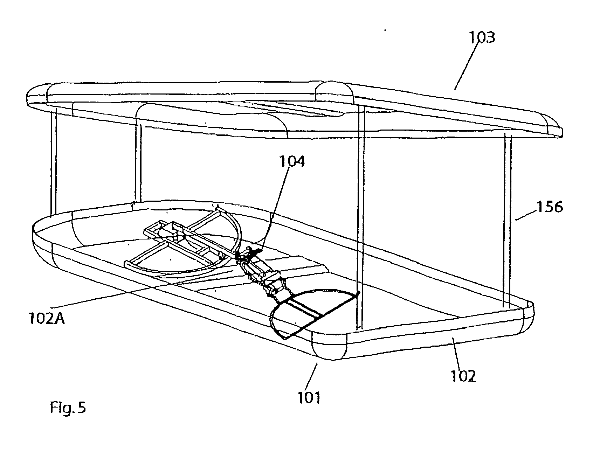

The second preferred design of a roof box arrangement 101, which is shown in the drawings in Figs. 4-7, differs from the first embodiment primarily in respect of the design and function of the support 105, for example for a wheel chair 115 and its effect and adjustment.

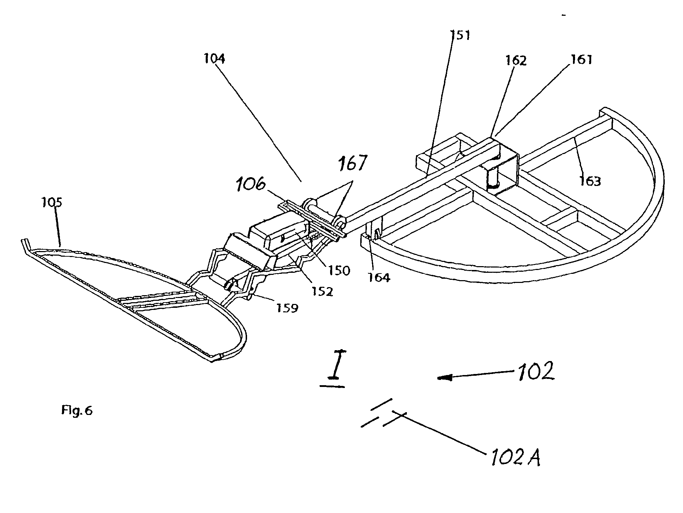

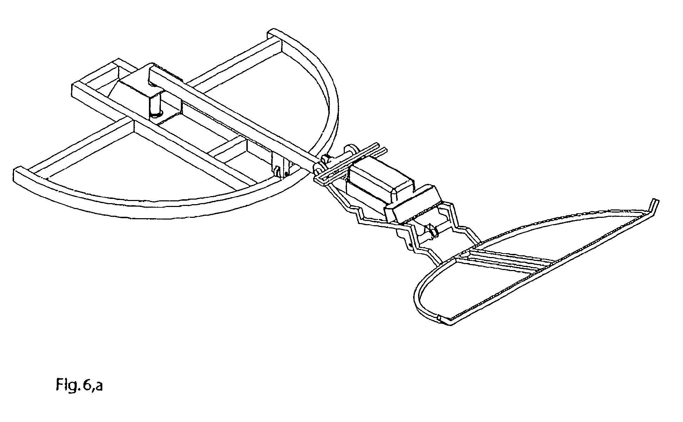

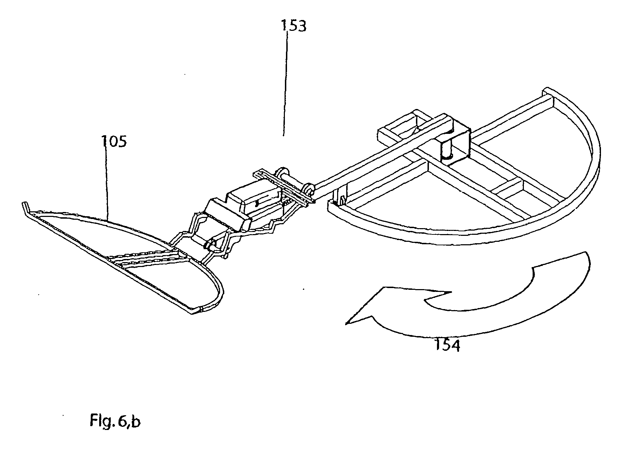

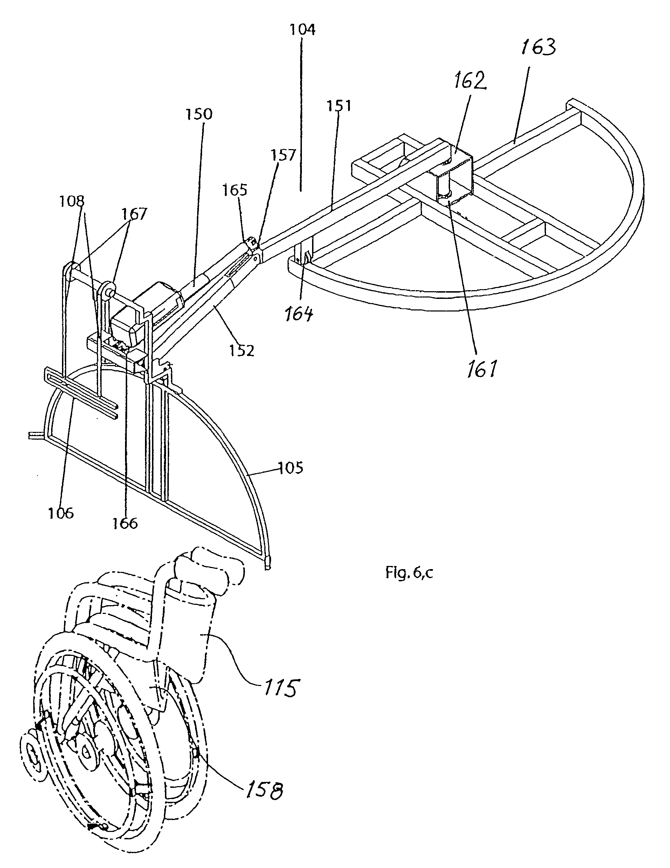

Illustrated in a horizontal rest position in Fig. 6 is an aforementioned pivotable hoist 104, in which position I the actuator 150 of the hoist is retained in the retracted position. This means that the carrying arms 151, 152 of the hoist are retained in an essentially horizontal position, similar to that in which the support 105 is retained. The aforementioned support can preferably be in the form of a bow-shaped frame 105, for example.

Slight actuation of the actuator 150 causes the aforementioned supporting frame 105 and the front arm 152 to be raised first by approximately 15 cm from the bottom 102A of the lower box bottom part 102. In the aforementioned raised position, pivoting of the entire arm 153 outwards to the desired side of the roof box arrangement 101 is possible in the direction of the arrow 154, by approximately 90°, and with the supporting frame 105 held in an essentially horizontal position.

In the aforementioned position, the whole of the upper part 103 of the box will have been raised directly upwards with the help of a scissor function 155 or some other jack effect 156, which opens and closes the box respectively after activation of an appropriate drive device. For example, the scissor function can be driven with the help of an electric motor and with threaded rods, although these are not shown in the drawings. The jack effect can be achieved, for example, with the help of four telescopic arms or gas-filled dampers which are mounted at the four corners of the box, and with the aforementioned hoist 104 mounted in the bottom part 102 of the box.

The hoist 104 is shown in Fig. 6 in the downward folded position in an imaginary box that is not shown here. In conjunction with this, for example, a raised wheel chair 115 is placed on the bottom 102A of the bottom part 102 of the roof box. In the aforementioned position the actuator 150 is extended by approximately 25 mm, which means that the front carrying arm 152 is kept angled at approximately 20°. The wheel chair 115 and a supporting frame 105 are placed together in this case on the bottom 102A of the box. In the aforementioned storage and transport position, the actuator 150 is extended by approximately 25 mm, which means that the front carrying arm 152 is kept angled at approximately 20°.

The drawing in Fig. 6C shows how the hoist 104 is arranged in the fully outward-pivoted position II of 90° to the left viewed in the normal direction of travel of the vehicle. In the aforementioned position II, the actuator 150 is extended for the whole of its travel, by approximately 150 mm. This means that the front carrying arm 152 will first have been hinged in the associated articulation 157 between the carrying arms 151, 152 to approximately 20° in a direction downwards against the effect of a built-in stop in the articulation 157. This operation takes up approximately 25 mm of the travel, and the remaining 125 mm of the total travel for the actuator 150 are achieved in the movement which hinges the formed load-bearing supporting frame 105 into a perpendicular position. Once this movement has been executed, an electric motor in question is activated for the purpose of driving the hoisting belts 108 for a hoisting hook 106, which is connected to a wheel chair 115, etc. The hoisting hook 106 is lowered to a point approximately 90 cm above the ground, where the hoisting hook 106 is connected to the object to be hoisted, for example the wheel chair 115, for example on its seat 158. The wheel chair 115 is then hoisted up into the box when the operating control for this purpose is actuated in a previously indicated fashion, in conjunction with which the same flow takes place, although in the reverse sequence.

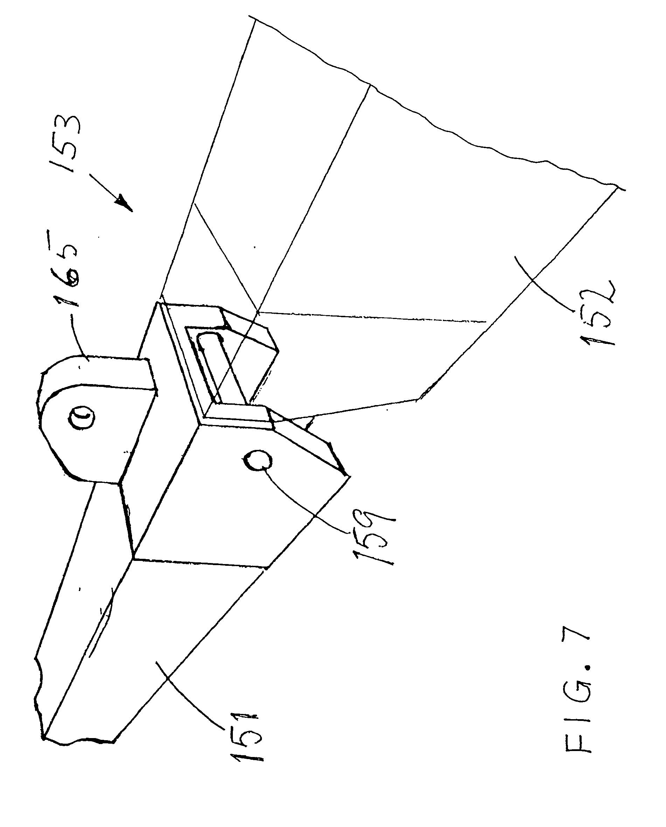

Illustrated in Fig. 7 is an articulation 159 between the arm 152 and the supporting frame 105 and with a built-in lock. Once the articulation 159 has been hinged to approximately 20°, the under edge of the front supporting arm 152 comes into contact with a stop on the rear attachment of the articulation. This means that the continued pivoting motion of the arm is arrested by a mechanical stop with the result that the travel of the actuator is utilized to cause the supporting frame 105 to hinge to the vertical position, as shown in Fig. 6c.

Other component parts illustrated in Fig. 6 are:

An electric motor with a gear 161 for the arm 104, a central hub 162 for the arm 104 and a sub frame 163 as a support 164 with a drive wheel and a motor run on a track in the form of a semi-circle in conjunction with swinging of the arm in a horizontal direction. The actuator 150 is attached to the arm 104 via a rear and a front attachment 165, 166 respectively.

The hoisting tapes 108 with the hook 106 run around a roller 167; which also contains an electric drive motor for winding up and lowering the tapes and the hook.

When hoisting the chair 115, this is supported against the supporting frame 105 in such a way that the chair avoids the risk of rotating, for example due to a high wind, and so that the aforementioned supporting frame 105 provides support for the chair for the duration of the period for which it is handled next to the box 101 and the vehicle.

The container for the roof box arrangement 1, 102 can exhibit many different designs and sizes without departing from the idea of invention. The precise design of the hoisting device 4, 104 is not restricted to a particular appearance, on condition that it is capable of being caused to pivot to both sides of the car 26. The holder 6; 106 can exhibit a hook-like form, for example, or may more closely resemble a coat hanger, depending on the type of object.

For example, the object can consist of other means of adaptation for handicapped persons, such as crutches, walking frames, walking frames on wheels and more advanced wheel chairs, although collapsible wheel chairs are a primary area of application. It will also be appreciated that, even if the invention permits the use of a comparatively low roof box, it is nevertheless possible to use larger types.

## Claims

1. Roof box arrangement (1; 101) for mounting on a vehicle (26), preferably a passenger car, which roof box arrangement (1; 101) has a container comprising an under part (2; 102) and an upper part (3; 103), in conjunction with which the roof box arrangement (1; 101) has at least one open position for loading and unloading and one closed position for the storage of objects (15, 115), the roof box arrangement (1; 101) comprising a hoisting device (4; 104) capable of being positioned internally within the container, and the hoisting device (4; 104) comprising a holder (6; 106) intended for engagement with an object, ***characterized in that*** the hoisting device (4, 104) is mounted in such a way as to be capable of being caused to pivot to either longitudinal side relative to the container, and **in that** the holder (6; 106), when the roof box arrangement (1; 101) is in the open position and the hoisting arrangement (4; 104) is in an outwardly-pivoted position, is capable of being lowered and raised, whereby which lowering and hoisting of the object to either longitudinal side of the roof box arrangement (1; 101) is permitted.

2. Roof box arrangement (1) according to claim 1, in which the object is capable of being loaded into and unloaded from the roof box arrangement (1) by means of the hoisting device moving the object in and out over the under part (2) of the container.

3. Roof box arrangement (1) according to claims 1 or 2, in which roof box arrangement (1) the hoisting device (4) is capable of being caused to pivot between 0 and 135 degrees to both sides from a starting position arranged essentially half-way between the longitudinal sides of the roof box arrangement (1).

4. Roof box arrangement (1) according to one of Claims 1-3, in which the hoisting arrangement comprises a drawing device (8) capable of being fed from a feed roller (9), to which drawing device the holder (6) is connected for the purpose of controlling raising and lowering.

5. Roof box arrangement (1) according to one of Claims 1-4, which roof box arrangement (1) is so arranged as to accommodate a collapsible wheel chair (15).

6. Roof box arrangement (1) according to one of Claims 1-5, in which a hoisting device attachment (11) is mounted on a support device (12), which support device (12) permits mounting in the longitudinal extent of the roof box arrangement (1) at an appropriate point, having regard for the position of the doors (27) of the vehicle (26) concerned.

7. Roof box arrangement (1) according to one of Claims 1-6, in which the upper part (3) of the container is capable of being opened and closed by activation of a Crab actuator (16).

8. Roof box arrangement (101) according to Claim 1, ***characterized in that*** the hoisting device (104) is formed by two pivotally attached arms (151, 152), which are capable of actuation by means of an actuator (150) for the purpose of causing them to pivot as a common arm (104) .

9. Roof box arrangement according to Claim 8, ***characterized in* that** the arm (152) comprises a lock (160) which restricts pivoting of the arm.

10. Roof box arrangement according to one of Claims 8-9, **characterized in that** a supporting frame (105) is pivotally attached to the aforementioned arm (104) via an articulation (159).

11. Load system for a collapsible wheel chair (15; 115) comprising a roof box arrangement (1; 101) according to one of the preceding claims.

12. Load system (1) according to Claim 11, in which the hoisting device (4) comprises a support (5) with variable positions, against which support (5) the collapsible wheel chair (15) makes contact, at least for that part of the hoisting operation during which the position of the collapsed wheel chair (15) deviates from an essentially vertical position in conjunction with loading and unloading.

13. Load system according to Claims 11 or 12, which load system is adapted to be connected to a control system in order to permit regulation of one of other of the following functions of the roof box arrangement (1) from a control panel (25):
• opening and closing of the roof box arrangement (1),
• pivoting of the hoisting device (4) to the left or the right when the roof box is open,
• raising and lowering of the collapsed wheel chair (15) when the wheel chair (15) is in engagement with the holder (6).

## Patentansprüche

1. Dachkofferanordnung (1; 101) zum Anbringen an einem Fahrzeug (26), bevorzugt einem Personenwagen, wobei die Dachkofferanordnung (1; 101) einen Behälter aufweist, der ein unteres Bauelement (2; 102) und ein oberes Bauelement (3; 103) umfasst, in Verbindung mit denen die Dachkofferanordnung (1; 101) mindestens eine offene Stellung zum Beladen und Entladen und eine geschlossene Stellung zur Lagerung von Gegenständen (15, 115) aufweist, wobei die Dachkofferanordnung (1; 101) eine Hebevorrichtung (4; 104) umfasst, die geeignet ist, innerhalb des Behälters positioniert zu werden, und die Hebevorrichtung (4; 104) eine Haltevorrichtung (6; 106) umfasst, bestimmt für die Verbindung mit einem Gegenstand, **dadurch gekennzeichnet, dass** die Hebevorrichtung (4, 104) in einer solchen Weise angebracht ist, dass sie relativ zum Behälter zu jeder longitudinalen Seite geschwenkt werden kann, und dass die Haltevorrichtung (6; 106) geeignet ist, abgesenkt und angehoben zu werden, wenn die Dachkofferanordnung (1; 101) in einer geöffneten Stellung ist und die Hebevorrichtung (4; 104) in einer nach außen geschwenkten Stellung ist, wodurch Absenken und Heben des Gegenstandes zu jeder longitudinalen Seite der Dachkofferanordnung (1; 101) ermöglicht ist.

2. Dachkofferanordnung (1) gemäß Anspruch 1, wobei der Gegenstand fähig ist, in die Dachkofferanordnung (1) geladen und aus ihr entladen zu werden, indem die Hebevorrichtung den Gegenstand über das untere Bauelement (2) des Behälters hinein- und hinausbewegt.

3. Dachkofferanordnung (1) gemäß Ansprüchen 1 oder 2, wobei in der Dachkofferanordnung (1) die Hebevorrichtung (4) fähig ist, zwischen 0 und 135 Grad aus einer Startstellung, die im Wesentlichen in der Mitte zwischen den longitudinalen Seiten der Dachkofferanordnung (1) angeordnet ist, zu beiden Seiten geschwenkt zu werden.

4. Dachkofferanordnung (1) gemäß einem der Ansprüche 1 - 3, wobei die Hebevorrichtung eine Zugvorrichtung (8) umfasst, imstande, von einer Ablaufrolle (9) versorgt zu werden, wobei die Haltevorrichtung (6) mit der Zugvorrichtung verbunden ist mit der Aufgabe, das Heben und Absenken zu steuern.

5. Dachkofferanordnung (1) gemäß einem der Ansprüche 1 - 4, wobei die Dachkofferanordnung (1) dazu angeordnet ist, einen zusammenklappbaren Rollstuhl (15) unterzubringen.

6. Dachkofferanordnung (1) gemäß einem der Ansprüche 1 - 5, wobei ein Hebevorrichtungsaufsatz (11) an einer Stützanordnung (12) angebracht ist und die Stützvorrichtung (12) Anbringen in der longitudinalen Ausdehnung der Dachkofferanordnung (1) an einen angemessenen Punkt, unter Berücksichtigung der Position der Türen (27) des betreffenden Fahrzeugs (26), ermöglicht.

7. Dachkofferanordnung (1) gemäß einem der Ansprüche 1 - 6, wobei das obere Bauelement (3) des Behälters imstande ist, durch Betätigung eines Crab-Aktuators (16) geöffnet und geschlossen zu werden.

8. Dachkofferanordnung (101) gemäß Anspruch 1, **dadurch gekennzeichnet, dass** die Hebevorrichtung (104) von zwei schwenkbar befestigten Armen (151, 152) gebildet wird, welche zur Betätigung vermittels eines Aktuators (150) imstande sind, mit der Aufgabe, diese zu veranlassen, als gemeinsamer Arm (104) zu schwenken.

9. Dachkofferanordnung gemäß Anspruch 8, **dadurch gekennzeichnet, dass** der Arm (152) ein Schloss (160) umfasst, das das Schwenken des Arms unterbindet.

10. Dachkofferanordnung gemäß einem der Ansprüche 8 - 9, **dadurch gekennzeichnet, dass** ein Stützrahmen (105) schwenkbar über ein Gelenk (159) an dem vorgenannten Arm (104) angebracht ist.

11. Beladungsanordnung für einen zusammenklappbaren Rollstuhl (15; 115), umfassend eine Dachkofferanordnung (1; 101) gemäß einem der vorangehenden Ansprüche.

12. Beladungsanordnung (1) gemäß Anspruch 11, wobei die Hebeanordnung (4) eine Stütze (5) mit variablen Stellungen umfasst, mit welcher Stütze (5) der zusammenklappbare Rollstuhl (15) in Kontakt tritt, mindestens für jenen Teil des Hebevorganges, bei dem die Stellung des zusammengeklappten Rollstuhls (15) im Zusammenhang mit Beladen und Entladen von einer im Wesentlichen vertikalen Stellung abweicht.

13. Beladungsanordnung gemäß Ansprüchen 11 oder 12, wobei die Beladungsanordnung angepasst ist, mit einer Steurungsanordnung verbunden zu sein, um die Regulierung von einer oder anderen der folgenden Funktionen der Dachkofferanordnung (1) von einem Bedienfeld (25) aus zu ermöglichen:
• Öffnen und Verschließen der Dachkofferanordnung (1),
• Schwenken der Hebeanordnung (4) nach links oder rechts, wenn der Dachkoffer geöffnet ist,
• Heben und Absenken des zusammengeklappten Rollstuhls (15), wenn der Rollstuhl (15) mit der Haltevorrichtung (6) verbunden.

## Revendications

1. Agencement de coffre sur toiture (1 ; 101) pour le montage sur un véhicule (26), de préférence un véhicule de tourisme, lequel agencement de coffre sur toiture (1 ; 101) comporte un conteneur comprenant une partie inférieure (2 ; 102) et une partie supérieure (3 ; 103), en liaison avec lesquelles l'agencement de coffre sur toiture (1 ; 101) présente au moins une position ouverte pour le chargement et déchargement et une position fermée pour le rangement d'objets (15 ; 115), l'agencement de coffre sur toiture (1 ; 101) comprenant un dispositif de levage (4 ; 104) pouvant être positionné à l'intérieur du conteneur, et le dispositif de levage (4 ; 104) comprenant un support (6 ; 106) destiné à coopérer avec un objet, **caractérisé en ce que** le dispositif de levage (4 ; 104) est monté de façon à pouvoir pivoter sur chaque côté longitudinal par rapport au conteneur, et **en ce que** le support (6 ; 106), lorsque l'agencement de coffre sur toiture (1 ; 101) est dans la position ouverte et le dispositif (4 ; 104) se trouve dans une position pivotée vers l'extérieur, est capable d'être abaissé et relevé, permettant ainsi d'abaisser et de relever l'objet de chaque côté longitudinal de l'agencement du coffre sur toiture (1 ; 101).

2. Agencement de coffre sur toiture (1) selon la revendication 1, dans lequel l'objet peut être chargé et déchargé de l'agencement de coffre de toiture (1) au moyen du dispositif de levage faisant entrer et sortir l'objet par la partie inférieure (2) du conteneur.

3. Agencement de coffre sur toiture (1) selon la revendication 1 ou 2, agencement de coffre sur toiture (1) dans lequel le dispositif de levage (4) peut être mis en pivotement entre 0 et 135 degrés de chaque côté à partir d'une position de départ disposée sensiblement à mi-chemin entre les côtés longitudinaux de l'agencement de coffre sur toiture (1).

4. Agencement de coffre sur toiture (1) selon l'une des revendications 1-3, dans lequel l'agencement de levage comprend un dispositif de traction (8) capable d'être alimenté par un rouleau d'alimentation (9), dispositif de traction auquel est rattaché le support (6) afin de contrôler le levage et la descente.

5. Agencement de coffre sur toiture (1) selon l'une des revendications 1-4, lequel agencement de coffre sur toiture (1) est disposé de façon à recevoir une chaise roulante escamotable (15).

6. Agencement de coffre sur toiture (1) selon l'une des revendications 1-5, dans lequel une fixation de dispositif de levage est montée sur un dispositif support (12), lequel dispositif support (12) permet le montage dans la partie longitudinale de l'agencement de coffre sur toiture (1) en un point approprié quant à la position des portes (27) du véhicule (26) concerné.

7. Agencement de coffre sur toiture (1) selon l'une des revendications 1-6, dans lequel la partie supérieure (3) du conteneur peut être ouverte et fermée par actionnement d'un organe d'actionnement « CRAB » (16).

8. Agencement de coffre sur toiture (101) selon la revendication 1, **caractérisé en ce que** le dispositif de levage (104) est formé par deux bras fixés de façon pivotante (151, 152) qui sont capables d'actionnement au moyen d'un organe d'actionnement (150), afin de les faire pivoter en tant que bras commun (104).

9. Agencement de coffre sur toiture selon la revendication 8, **caractérisé en ce que** le bras (152) comprend un verrou (160) qui limite le pivotement du bras.

10. Agencement de coffre sur toiture selon l'une des revendications 8-9, **caractérisé en ce qu'**un châssis de support (105) est fixé de façon pivotante sur le bras mentionné ci-dessus (104) par l'intermédiaire d'une articulation (159).

11. Système de charge pour un fauteuil roulant escamotable (15; 115) comprenant un agencement de coffre sur toiture (1; 101) selon l'une des revendications précédentes.

12. Système de charge (1) selon la revendication 11, dans lequel le dispositif de levage (4) comprend un support (5) avec des positions variables, support (5) contre lequel le fauteuil roulant escamotable (15) vient en contact, au moins pour cette partie de l'opération de levage pendant laquelle la position du fauteuil roulant escamotable (15) s'écarte d'une position sensiblement verticale en liaison avec le chargement et déchargement.

13. Système de charge selon les revendications 11 ou 12, lequel système de charge est prévu pour être raccordé sur un système de contrôle, afin de permettre la régulation de l'une ou l'autre des fonctions suivantes de l'agencement de coffre sur toit (1) à partir d'un tableau de commande (25) :
• ouverture et fermeture de l'agencement de toit sur toiture (1),
• pivotement du dispositif de levage (4) vers la gauche ou vers la droite lorsque le coffre de toiture est ouvert,
• montée et descente du fauteuil roulant escamotable (15) lorsque le fauteuil roulant (15) est en engagement avec le support (6).
